# FASCICULE DE BREVET EUROPEEN

(11) **EP 0 428 420 B1**
(45) Date de publication et mention de la délivrance du brevet: **26.05.1993**
(21) Numéro de dépôt: 90402874.3
(22) Date de dépôt: 15.10.1990
(51) Int. Cl.: F16D 3/207

(54) **Joint homocinétique à tripode à retenue axiale**
Homokinetische Tripodenkupplung mit Axialbefestigung
Tripod homokinetic joint with axial retention

(30) Priorité: 13.11.1989 FR 8914847
(43) Date de publication de la demande: 22.05.1991
(73) Titulaire: GLAENZER SPICER, F-78301 Poissy (FR)
(72) Inventeur: Guingand, Daniel, F-78510 Triel S/Seine (FR); Verbrugge, François, F-95000 Cergy Pontoise (FR)
(74) Mandataire: Polus, Camille

(56) Documents cités:
- FR-A- 2 176 216

## Description

La présente invention est relative à un joint homocinétique à tripode du type comprenant une tulipe et un tripode dont le centre rotule avec une liberté de mouvement radial contre le fond de la tulipe et est maintenu sous précontrainte axiale contre ce fond par une attache élastique comportant une partie centrale en forme de cuvette comprenant un fond qui est en contact avec une surface en vis-à-vis du centre du tripode et une paroi latérale depuis le bord périphérique de laquelle s'étendent des branches dont les extrémités libres sont reliées à la tulipe.

Un joint de ce type est par exemple décrit dans le document FR-A-2.487.022. Dans l'attache élastique utilisée dans ce document pour assurer la fonction de retenue axiale du tripode, le fond de la cuvette est sensiblement plat et constitue une table d'appui avec laquelle est en contact une surface sphérique du centre du tripode.

L'attache élastique est une pièce réalisée par découpe et pliage d'une feuille de métal élastique. Un bon appui de la sphère du tripode dépend des dimensions de la table d'appui triangulaire avec laquelle doit rester en contact le centre sphérique du tripode quelle que soit la position du tripode à l'angularité maximale du joint. La hauteur du triangle équilatéral d'appui est limitée par le fait que, lorsque le joint est sous angle de braquage maximum, la position extrême du galet équipant l'un des bras du tripode impose un angle de pliage déterminé de la paroi latérale de la cuvette par rapport au fond dans la zone correspondante.

De plus, dans le cas où les galets du tripode coopèrent avec des pistes sensiblement toriques formées dans la tulipe, la position extrême du galet s'approche encore davantage de l'axe du joint, ce qui impose d'accentuer l'angle le pliage de la tôle. Le rayon de pliage qui résulte de cet impératif peut devenir incompatible avec les nécessités de débattement du tripode sur la table d'appui plane, le tripode risquant de venir en appui sur le rayon de pliage.

Afin de remédier aux inconvénients qui viennent d'être mentionnés, l'invention propose un joint homocinétique du type mentionné plus haut caractérisé en ce que chacune des portions de la paroi latérale de la cuvette qui s'étend entre deux branches consécutives comporte un trou, ce qui permet de supprimer le rayon de pliage dans cette zone et d'augmenter les dimensions de la table d'appui.

Selon d'autres caractéristiques de l'invention :
- chacune des portions de paroi latérale est une portion incurvée dont la convexité est tournée vers l'intérieur de la cuvette ;
- la portion incurvée est une portion de profil de révolution, notamment cylindrique dont l'axe est concourant avec l'axe de la tulipe ;
- les portions de la paroi latérale de la cuvette auxquelles sont reliées les racines des branches et qui s'étendent entre les portions trouées de la paroi latérale sont des portions planes sensiblement triangulaires ;
- l'attache est réalisée en une seule pièce dans une feuille de métal élastique ; et
- l'attache présente une symétrie ternaire autour de l'axe de la tulipe.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe longitudinale d'un joint homocinétique équipé d'une attache élastique selon l'état de la technique ;
- la figure 2 est une vue extérieure de la tulipe du joint de la figure 1 illustrant le montage de l'attache élastique ;
- la figure 3 est une vue en perspective d'une attache élastique réalisée conformément aux enseignements de l'invention ;
- les figures 4A et 4B sont des schémas qui illustrent les positions radiales maximales qu'occupe la sphère centrale du tripode par rapport à sa table d'appui pour deux positions différentes de fonctionnement du joint selon l'état de la technique ;
- les figures 5A et 5B sont des vues similaires à celles des figures 4A et 4B d'un joint homocinétique équipé d'une attache élastique trouée conformément aux enseignements de l'invention ; et
- la figure 6 est une vue similaire à celle de la figure 3 d'un autre mode de réalisation de l'attache élastique.

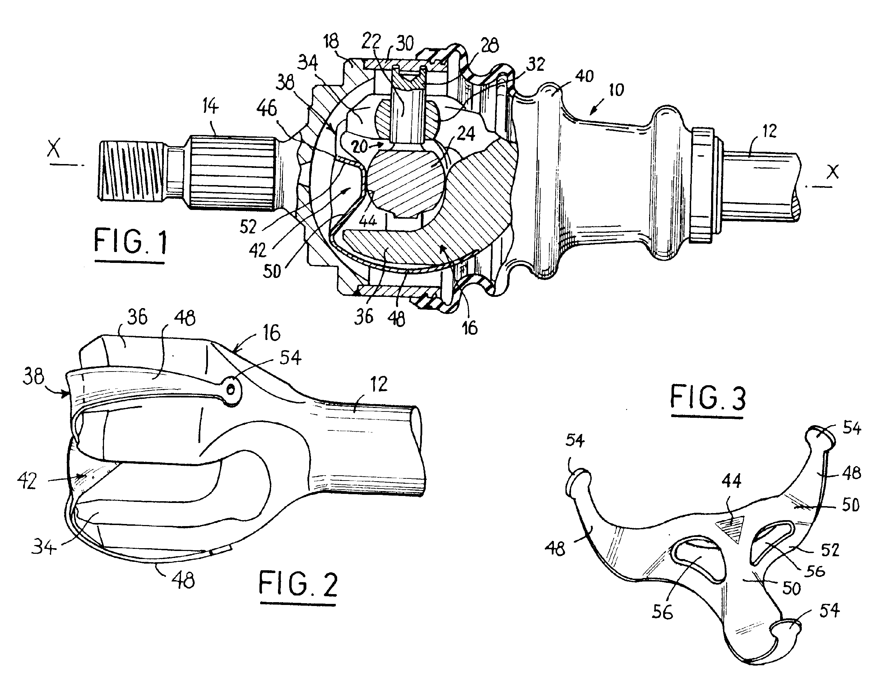

On a représenté à la figure 1 un joint homocinétique 10 qui relie un arbre de transmission suspendu 12 à la fusée 14 d'une roue avant motrice d'un véhicule à traction avant.

Le joint comprend une tulipe 16 solidaire de l'arbre 12 et un bol 18 solidaire de la fusée 14. Le tripode 20 comprend trois bras radiaux coplanaires 22 et son centre est constitué par une rotule sphérique 24. Les extrémités libres 26 des bras 22 sont fixées à la paroi latérale cylindrique 30 du bol 18.

Chaque bras 22 porte à rotation et à coulissement un galet 32 dont la surface externe est sphérique et qui est reçu dans un chemin de roulement 34 qui, dans l'exemple représenté à la figure 1, est à section circulaire et creusée dans la tulipe parallèlement à l'axe X-X de celle-ci. Chaque chemin de roulement peut également présenter un profil torique.

Chaque chemin de roulement 34 est constitué de deux pistes en vis-à-vis usinées sur les bords de deux des trois pétales 36 de la tulipe 16, ces pétales ayant une orientation générale parallèle à l'axe X-X commun à l'arbre 12 et à la tulipe 16 et étant dirigés, depuis le fond de la tulipe, dans le sens opposé à cet arbre.

Le joint 10 comprend également une attache élastique 38 de retenue axiale du tripode 20 qui est fixée à la tulipe 16 et un soufflet 40 qui est fixé de façon étanche d'une part à la périphérie d'entrée du bol 18, et d'autre part sur l'arbre 12.

L'attache élastique 38 est réalisée d'une seule pièce à partir d'une feuille de métal élastique, par exemple de l'acier à ressort. Elle présente, comme l'ensemble du joint homocinétique, une symétrie ternaire autour de l'axe longitudinal X-X de la tulipe 16 qui est également l'axe du joint lorsque ce dernier est en position parfaitement alignée comme il est représenté à la figure 1.

L'attache élastique 38 comporte une partie centrale emboutie 42 en forme de cuvette.

La cuvette 42 comprend un fond plan de forme sensiblement triangulaire 44 et une paroi latérale depuis le bord périphérique 46 de laquelle partent trois branches élastiques 48 de forme allongée. La surface plane du fond 44 tournée vers l'intérieur du joint est en appui élastique contre la surface externe sphérique de la rotule 24 du tripode 20.

La paroi latérale de la cuvette 42 comprend trois parties triangulaires et sensiblement planes 50 dont chacune relie le fond 44 à la racine d'une des branches 48.

Entre les trois portions 50, la paroi latérale de la cuvette 42 est constituée par trois portions incurvées 52. Chacune des portions 52 est une portion de profil sensiblement cylindrique dont la convexité est tournée vers l'intérieur de la cuvette et dont l'axe est concourant avec l'axe X-X de la tulipe lorsque l'attache 38 occupe la position normale de montage représentée aux figures 1 et 2.

Les extrémités libres 54 des branches 48 sont fixées, par tout moyen convenable, à la surface périphérique externe de la tulipe 16.

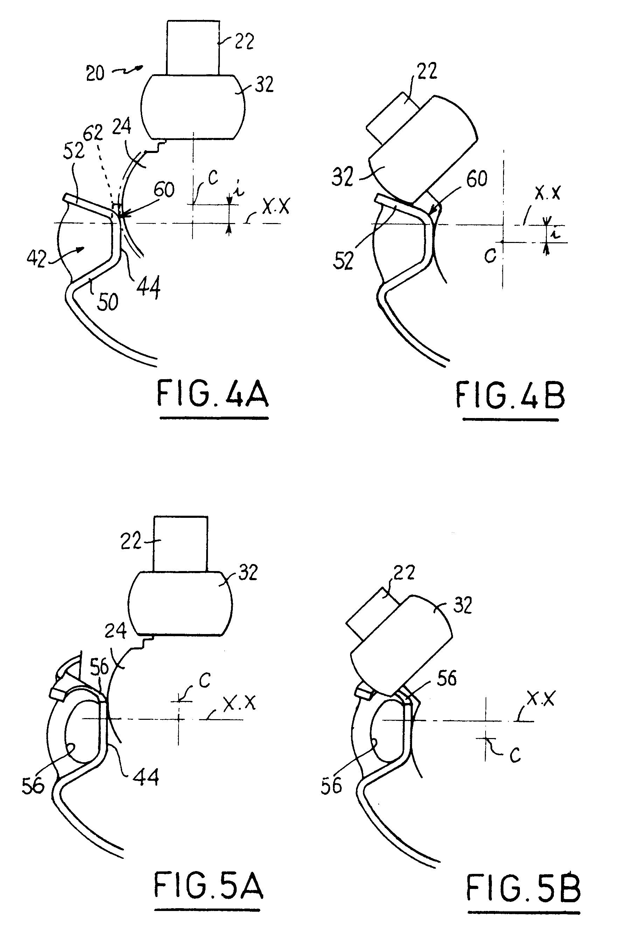

Conformément à l'invention, et comme cela est représenté à la figure 3, et aux figures 5A et 5B, chacune des portions 52 de la paroi latérale de la cuvette 42 comporte un trou 56 qui permet d'augmenter la liberté de mouvement radial du tripode 20 par rapport à la tulipe 16.

Comme on peut le voir à la figure 4A, dans le cas d'un joint dont l'attache élastique ne comporte pas de trous dans les portions 52 de la paroi latérale de la cuvette 42, la partie centrale 24 du tripode 20 en forme de rotule sphérique vient en appui contre le rayon de pliage 60 qui relie la portion 52 à la table d'appui triangulaire 44 pour un offset "i" de son centre C par rapport à l'axe X-X. Lorsque le joint est dans une position de braquage maximum, et notamment dans le cas où les pistes 34 sont des pistes toriques, la surface externe sphérique du galet 32 vient en butée contre la portion 52 ce qui limite l'appui et dont le maintien axial.

Il est par ailleurs impossible de réduire l'inclinaison de la surface 52 par rapport à l'axe X-X car cela nécessiterait d'augmenter encore le rayon de pliage 60 qui est néfaste par ailleurs comme on l'a représenté à la figure 4A.

Par contre, grâce aux trous 56 prévus dans les portions latérales 52 et comme cela est représenté aux figures 5A et 5B il est possible d'augmenter la hauteur de la surface d'appui de la table 44 par rapport à l'axe X-X et de supprimer les rayons de pliage 60. Le gain en hauteur de la table 44 est représenté en pointillés 62 à la figure 4A.

Les trous 56 permettent également, pour une position de braquage maximal, de s'assurer que la sphère 24 est en appui sur la table 44 quelle que soit la position du tripode.

De plus les trous 56 permettent d'augmenter l'élasticité obtenue pour l'attache 38, cette dernière permettant ainsi d'absorber de plus grandes tolérances de fabrication.

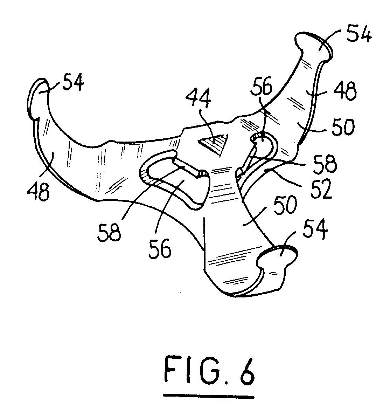

On a représenté à la figure 6 un autre mode de réalisation de l'attache élastique. Sur cette figure, les mêmes chiffres de référence sont utilisés pour désigner les éléments identiques ou équivalents à ceux de la figure 3.

Afin d'augmenter encore la hauteur radiale de la table d'appui triangulaire 44, les côtés de ce triangle se prolongent par des pattes d'appui 58 qui s'étendent dans le plan de la table au-dessus des portions incurvées 52 de la paroi latérale.

Les pattes 58 sont avantageusement réalisées lors de l'opération de découpe initiale des trous 56 et avant le pliage de l'attache.

## Revendications

1. Joint homocinétique (10) à tripode du type comprenant une tulipe (16) et un tripode (20) dont le centre (C) rotule avec une liberté de mouvement radial contre le fond de la tulipe et est maintenu sous précontrainte axiale contre ce fond par une attache élastique (38) comportant une partie centrale en forme de cuvette (42) comprenant un fond (44) qui est en contact avec une surface en vis-à-vis du centre (24) du tripode et une paroi latérale (50-52) depuis le bord périphérique (46) de laquelle s'étendent des branches (48) dont les extrémités libres (54) sont reliées à la tulipe (16), caractérisé en ce que chacune des portions (52) de ladite paroi latérale qui s'étend entre deux branches consécutives (48) comporte un trou (56) pour augmenter ladite liberté de mouvement radial.

2. Joint selon la revendication 1, caractérisé en ce que le fond (44) de la cuvette est sensiblement plan et est en contact avec une surface sensiblement sphérique (24) du centre du tripode (20).

3. Joint selon l'une des revendications 1 ou 2, caractérisé en ce que chacune desdites portions (52) de paroi latérale est une portion incurvée dont la convexité est tournée vers l'intérieur de la cuvette (42).

4. Joint selon la revendication 3, caractérisé en ce que la portion incurvée (52) est une portion de profil sensiblement de révolution dont l'axe est concourant avec l'axe de la tulipe (16).

5. Joint selon la revendication 4, caractérisé en ce que la portion incurvée (32) est une portion de profil cylindrique.

6. Joint selon l'une quelconque des revendications précédentes, caractérisé en ce que les portions (50) de ladite paroi latérale auxquelles sont reliées les racines des branches (48) et qui s'étendent entre lesdites portions trouées (52) sont des portions planes sensiblement triangulaires.

7. Joint de transmission selon l'une quelconque des revendications précédentes, caractérisé en ce que le fond (44) de la cuvette est sensiblement plan et de contour triangulaire, les côtés du triangle se prolongeant par des pattes d'appui (58) qui s'étendent dans ledit plan au-dessus desdites portions incurvées (52) de paroi latérale.

8. Joint selon l'une quelconque des revendications précédentes, caractérisé en ce que l'attache (38) est réalisée en une seule pièce dans une feuille de métal élastique.

9. Joint selon l'une quelconque des revendications précédentes, caractérisé en ce que l'attache (38) présente une symétrie ternaire autour de l'axe (X-X) de la tulipe.

## Patentansprüche

1. Homokinetisches Tripodegelenk (10), bestehend aus einer Tulpe (16) und einer Tripode (20), deren Mittelteil (C) mit einer radialen Bewegungsfreiheit gegenüber dem Boden der Tulpe in Form eines Kugelgelenks aufliegt und unter axialer Vorspannung gegen diesen Boden durch eine elastische Befestigung (38) gehalten wird, die ein Mittelteil in Form einer Schale (42) enthält, bestehend aus einem Boden (44), der mit einer gegenüberliegenden Fläche des Mittelteils der Tripode (24) in Berührung steht, und einer Seitenwand (50,52), von deren Umfangsrand (46) aus sich Schenkel (48) erstrecken, deren freie Enden (54) mit der Tulpe (16) verbunden sind,
dadurch gekennzeichnet,
daß jedes der Teile (52) der Seitenwand der Schale, die sich zwischen zwei aufeinanderfolgenen Schenkeln (48) erstrecken, eine Öffnung (56) zur Vergrößerung der radialen Bewegungsfreiheit enthält.

2. Gelenk nach Anspruch 1, dadurch gekennzeichnet, daß der Boden (44) der Schale im wesentlichen eben ist und mit einer im wesentlichen kugelförmigen Fläche des Mittelteils der Tripode (20) in Berührung steht.

3. Gelenk nach einem der Ansprüche 1 oder 2, dadurch gekennzeichnet, daß jedes der Teile (52) der Seitenwand ein gekrümmtes Teil ist, dessen Wölbung in das Innere der Schale (42) gerichtet ist.

4. Gelenk nach Anspruch 3, dadurch gekennzeichnet, daß das gekrümmte Teil (52) im wesentlichen ein Drehprofilteil ist, dessen Achse mit der Achse der Tulpe (16) zusammenfällt.

5. Gelenk nach Anspruch 4, dadurch gekennzeichnet, daß der gekrümmte Teil (52) ein zylindrisches Profilteil ist.

6. Gelenk nach einem der vorangehenden Ansprüche, dadurch gekennzeichnet, daß die Teile (50) der Seitenwand, mit welchen die Basen der Schenkel (48) verbunden sind und die sich zwischen den gelochten Teilen (52) erstrecken, ebene, im wesentlichen dreieckige Teile sind.

7. Gelenk nach einem der vorangehenden Ansprüche, dadurch gekennzeichnet, daß der Boden (44) der Schale im wesentlichen eben ist und einen dreieckigen Umriß besitzt, wobei die Seiten des Dreiecks durch Auflagen (58) fortgesetzt werden, die sich in der Ebene oberhalb der gekrümmten Teile (52) der Seitenwand erstrecken.

8. Gelenk nach einem der vorangehenden Ansprüche, dadurch gekennzeichnet, daß die Befestigung (38) in einem einzigen Stück Blech aus einem elastischen Metall gebildet wird.

9. Gelenk nach einem der vorangehenden Ansprüche, dadurch gekennzeichnet, daß die Befestigung (38) eine dreifache Symmetrie um die Achse (X-X) der Tulpe aufweist.

## Claims

1. Hooke's joint having a tripod, of the type comprising a tulip-shaped housing (16) and a tripod (20) of which the centre (C) swivels with a radial clearance for movement against the base of the tulip and is held under axial pre-stress against this base by a resilient connection (38) having a central part in the form of a cup (42) comprising a base (44) which is in contact with an opposing surface of the centre (24) of the triped and a lateral well (50-52), and in which branches (48), of which the free ends (54) are connected to the tulip (16), extend from the peripheral edge (46) of the said lateral wall, characterised in that each of the parts (52) of the said lateral wall which extends between two consecutive branches (48) has a hole (56) to increase the said radial clearance for movement.

2. Joint as claimed in claim 1, characterised in that the base (44) of the cup is substantially plane and is in contact with a substantially spherical surface (24) of the centre of the tripod (20).

3. Joint as claimed in one of claims 1 or 2, characterised in that each of the said parts (52) of the lateral wall is a curved part of which the convexity is turned towards the interior of the cup (42).

4. Joint as claimed in claim 3, characterised in that the curved part (52) is a part having a substantially rotational profile of which the axis is concurrent with the axis of the tulip (16).

5. Joint as claimed in claim 4, characterised in that the curved part (32) is a part of cylindrical profile.

6. Joint as claimed in any one of the preceding claims, characterised in that the parts (50) of the said lateral wall to which the roots of the branches (48) are connected and which extend between the said parts (52) provided with holes are substantially triangular plane parts.

7. Transmission joint as claimed in any one of the preceding claims, characterised in that the base (44) of the cup is substantially plane and of triangular contour, the sides of the triangle being prolonged by supporting lugs (58) which extend in the said plane above the said curved parts (52) of the lateral wall.

8. Joint as claimed in any one of the preceding claims, characterised in that the connection (38) is made in one piece from a sheet of resilient metal.

9. Joint as claimed in any one of the preceding claims, characterised in that the connection (38) has a ternary symmetry about the axis (X-X) of the tulip.
